# EUROPEAN PATENT SPECIFICATION

(11) **EP 4 085 173 B1**
(45) Date of publication and mention of the grant of the patent: **07.06.2023**
(21) Application number: 22716876.2
(22) Date of filing: 18.03.2022
(51) Int. Cl.: E04B 7/22, E04B 7/24, E04D 3/35, E04D 13/16, E04D 13/17, F24S 20/67, H02S 20/23, E04C 2/292

(54) **ROOF ELEMENT SYSTEM**
DACHELEMENTSYSTEM
SYSTÈME D'ÉLÉMENT DE TOITURE

(30) Priority: 24.03.2021 DE 102021107398; 01.09.2021 DE 102021122578
(43) Date of publication of application: 09.11.2022
(73) Proprietor: ecoworks GmbH, 10559 Berlin (DE)
(72) Inventor: OEHLER, Jens Stefan, 55270 Jugenheim (DE)
(74) Representative: Frick, Robert
(86) International application number: PCT/EP2022/057102
(87) International publication number: WO 2022/200195

(56) References cited:
- EP-A1- 0 814 216
- DE-A1- 1 913 409
- DE-C- 467 209
- GB-A- 2 452 612
- IE-A1- 20 100 711
- US-A- 3 466 831
- US-A- 4 837 999

## Description

The invention relates to a method of constructing a building roof using special roof elements and to the corresponding roof elements per se. The method in accordance with the invention or the roof elements in accordance with the invention are in particular suitable for use as part of an energetic building restoration, but can alternatively also be used in roof extensions or in new builds.

An extensive restoration of the existing building stock is inter alia necessary to achieve the target set by a large number of governments to reduce emissions and energy consumption as comprehensively as possible. The restoration should preferably ultimately enable a CO₂ neutral operation of the buildings. A large number of approaches have already been developed and tested in the past for energetic building restoration that were, however, problematic for different reasons or that have at least not established themselves to a real extent. A "serial restoration" into CO₂ neutral buildings based on the principles of the passive house standard is currently discussed as a very promising concept in Germany.

A comprehensive concept for serial building restoration is presented, for example, in DE 10 2021 107 398.7. The concept comprises the preferably complete sheathing of an existing building from the cellar to the roof and correspondingly already comprises a concept for the construction of a building roof.

It is the object of the invention to further develop a concept such as envisaged in DE 10 2021 107 398.7 for the construction of a building roof.

Documents EP 0 814 216 A1, DE 19 13 409A1, GB 2 452 612 A, US 3 466 821 A and US 4 837 999 A disclose methods in agreement with the preamble of claim 1.

Against this background, the invention relates to a method of constructing a pitched building roof, in particular a saddle roof, according to claim 1, wherein a plurality of prefabricated roof elements are delivered to a construction site and are placed on a roof framework of the building to form a more or less pitched roof surface; wherein the prefabricated roof elements each comprise a roof panel element and a metal sectional sheet covering the panel element at its upper side, wherein the metal sectional sheet is fastened to the panel element such that a ventilation gap is formed between the panel element and the metal sectional sheet, and wherein the metal sectional sheet projects laterally beyond the panel element at at least a longitudinal side of the roof element and forms an overhang; and wherein the roof elements are placed edge to edge at the roof framework so that the overhang of the metal sectional sheet of a roof element covers the abutment between the one roof element and an adjacent roof element of the roof surface as well as a lateral marginal region of the adjacent roof element.

The panel elements are insulated and produced in a wooden frame construction. Such panel elements comprise at least one outer frame, preferably of wood or a wooden material. In the event of cutouts for roof windows, for example, these cutouts can also be defined by a frame, preferably a wooden frame. The elements of the outer frame or also of further frames, if present, can be reinforced by struts, preferably wooden struts. The frame scaffold at the upper and lower sides of the panel elements is preferably covered by boards. A wooden material can also be used as the construction material here, with gypsum fiber boards also being able to be preferred for fire prevention reasons in a different embodiment. An insulating material, for example an insulation of renewable or recycled raw materials such as cellulose material or wood fibers, can be introduced into the hollow spaces defined between the frame elements and the cover boards. Provision can in particular be made that the main components of the panel elements, that is the frame, boards, and insulating material, are produced from renewable, recycled and/or biologically degradable raw materials.

The use of boardwalk supports for the construction of the elements of the outer frame and of any further frames, ribs, or struts is particularly preferred in an embodiment.

In an embodiment, the metal sectional sheet above the panel element is a corrugated sheet or a trapezoidal sheet. The use of metallic sheets is preferred.

The metal sectional sheet preferably projects laterally beyond the panel element in its transverse direction. It is particularly preferred here that the metal sectional sheet projects so far beyond the panel element that the overhang comprises at least one sectional structure of the repetitive sectional structures of the metal sectional sheet, for example a corrugation or a trapezoid. The metal sectional sheet preferably terminates flush with the panel element at the other side of the roof element, with the same repetitive sectional structure being present at this margin of the metal sectional sheet as at the overhang, for example likewise a corrugation or a trapezoid. The corresponding sectional structures can thus engage into one another and form a rainproof termination when the roof elements are placed at one another.

Spacing strips are arranged between the panel element and the metal sectional sheet, for example as a batten or as a counter batten, to define the ventilation gap between the metal sectional sheet and the panel element. These strips can also be produced from wood.

In an embodiment, the prefabricated roof elements additionally comprise at least one photovoltaic module that is fastened above the metal sectional sheet. It is preferred that the photovoltaic module or modules covers/cover the roof element over as large an area as possible. Metal connectors that are anchored, for example screwed or riveted, at the metal sectional sheet can serve the fastening of the photovoltaic modules, for example. The prefabricated roof elements can also already comprise cabling for the connection of the photovoltaic module or modules to enable an installation on site that is as simple and as fast as possible.

In an embodiment,, the roof framework is a purlin roof and the roof elements are placed on inferior purlins and ridge purlins or on inferior and center purlins, or on center and ridge purlins of the roof framework and are fastened there using suitable fastening elements, for example using metal brackets and screws or snap locks.

The dimensions of the roof elements are preferably such that they extend over the total pitched roof surface in their longitudinal directions. To this extent, the pitched roof surface is preferably formed by a row of roof elements placed laterally edge to edge as part of the method in accordance with the invention.

Provision can be made in an embodiment that a prefabricated installation unit composed of two roof elements connected via a joint along oppositely disposed transverse sides is placed onto the roof framework with the two roof elements of the installation unit forming parts of the two pitched roof surfaces of a roof having at least two pitched roof surfaces. The roof elements of the installation unit can be moved at the joint from a folded position into an open position prior to the placing onto the roof framework to be able to cover both saddle roof sides at once with this unfolded double roof element.

A sheet metal covering is preferably fit over the outwardly directed side edge of the terminating roof element at the lateral termination of the roof or at the verge.

The method in accordance with the invention can be part of a method for the energetic renovation of an existing building, part of a method for roof extension, part of a method for a roof conversion, or part of a method for erecting a new build building.

Provided that the method in accordance with the invention is carried out as part of an energetic building renovation or as part of a roof extension, at least a part of the existing building roof has to be removed beforehand. In an embodiment, new inferior, ridge, and possibly center purlins are placed that then serve as supports for the roof elements. Alternatively, existing purlins of the building can be used as supports.

In a preferred embodiment, the roof elements are produced in a manner such that they are adapted to an individual building geometry. The planning required for this purpose can be assisted by a previous inventory via, for example, a laser scan or photographic measurement at the existing building. The dimensions thus acquired can be converted into corresponding production data by means of planning software. The roof elements can in this manner be manufactured using a standardized structure and standardized components, but individual dimensions, via individualized mass production.

The invention further relates to a roof element according to claim 9, for use in a method in accordance with the invention, wherein the roof element comprises a panel element and a metal sectional sheet covering the panel element at its upper side, wherein the metal sectional sheet is fastened to the panel element such that a ventilation gap is formed between the panel element and the metal sectional sheet, and wherein the metal sectional sheet projects laterally beyond the panel element at at least one side edge of the roof element and forms an overhang, wherein the panel elements are insulated and produced in a wooden frame construction, with in particular wooden boardwalks being used as supports for the wooden frames, and wherein spacing strips are arranged between the panel element and the metal sectional sheet, for example as a batten or counter batten, to define the ventilation gap between the metal sectional sheet and the panel element. With respect to preferred embodiments of the roof element in accordance with the invention, reference can be made to the description of the prefabricated roof element as part of the description of the method in accordance with the invention.

The installation speed can be extremely accelerated using this embodiment of the completely prefabricated roof elements including photovoltaic modules in comparison with a conventional roof conversion so that the open roof is already weatherproof again in a few hours. A few tradespersons only have to stay on the roof for a brief time to screw the roof elements to one another and to connect the photovoltaic cables to one another by means of plugs. The conventional scaffolding of the building can thereby be dispensed with for the roof structure.

The invention furthermore also relates to an installation unit composed of two roof elements in accordance with the invention connected via a joint along oppositely disposed transverse sides.

Further details and advantages of the invention result from the embodiments described in the following with reference to the Figures. There are shown in the Figures:
- Figure 1:: the support of a further roof element at an existing roof element as part of a method in accordance with the invention;
- Figure 2:: the two roof elements after the attachment of the further roof element;
- Figure 3:: the region around the verge of a roof surface in an embodiment, obtained using a method in accordance with the invention;
- Figure 4:: the region around the verge of a roof surface in a different embodiment, obtained using a method in accordance with the invention;
- Figure 5:: the eaves area of a roof surface in an embodiment, obtained using a method in accordance with the invention;
- Figure 6:: the eaves area of a roof surface in a different embodiment, obtained using a method in accordance with the invention;
- Figure 7:: a roof surface obtained using a method in accordance with the invention in the region of a center purlin;

- Figure 8:: an installation unit composed of two roof elements connected in an articulated manner in the folded and the open positions; and
- Figure 9:: the ridge region of a roof that was obtained by placing the installation unit onto a purlin roof.

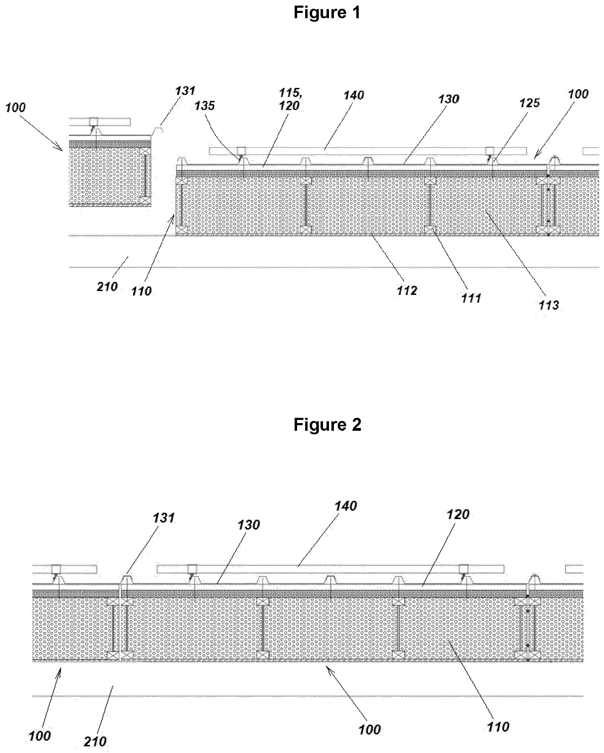

Figures 1 and 2 schematically show a partial sequence of a method in accordance with the invention, wherein a further prefabricated roof element 100 (at the left in the Figures) is attached to a roof surface that is formed from a plurality of prefabricated roof elements 100 (at the right in the Figure) placed edge to edge.

All the roof elements 100 are produced in a factory beforehand and are then delivered to a construction site by truck. They are there raised to a roof framework of the building by a crane and are placed on there. A preferred variant of the method is shown in the embodiments, in which method the roof elements 100 are placed onto a purlin roof. The purlins 210 of this purlin roof can be schematically recognized in Figures 1 and 2.. The fastening of the roof elements 100 to the purlin 210 or to further purlins of the purlin roof takes place using suitable fastening elements that are not shown in Figures 1 and 2, for example using metal brackets and screws.

The roof elements 100 each comprise a panel element 110, a metallic trapezoidal sheet 130 covering the panel element 110 at its upper side and a photovoltaic module 140 that is positioned in front of the metal sectional sheet and covers the trapezoidal sheet 130 over a large area. In the embodiment, the photovoltaic modules 140 of adjacent roof elements 100 are designed with open joints and do not cover the trapezoidal sheet 130 completely. In an alternative embodiment of the invention, provision can, however, also be made that the photovoltaic modules 140 lie directly edge to edge and serve as a water-conducting topmost layer.

The photovoltaic modules 140 shadow the trapezoidal sheet 130 and so reduce its heating up and the UV influence, which results in a better service life and a smaller heating up of the roof surface.

The panel elements 110 are produced in lightweight wooden construction and comprise an outer frame and ribs of wooden boardwalk supports 111. The upper and lower sides of the outer frame are covered using wood material boards. An insulation 113 of renewable or recycled raw materials such as cellulose material or wood fibers is introduced into the hollow spaces defined between the supports 111 and the boards 112. The thickness of the panel elements 110 can amount, for example, to between 20 cm and 50 cm, in particular between 25 cm and 35 cm, whereby the insulating effect is optimized and a large span of the stability-producing panel elements 110 is made possible. The design of the supports 111 as wooden boardwalks permits the achieving of these thicknesses with a simultaneously low weight. The use of wooden boardwalks in particular also reduces the heat bridges to a minimum. Very high insulation effects can be achieved for the panel elements 110 , for example having a U value of less than 0.14 W/(m²K), using the shown construction. In an embodiment, roof surface windows and cable conduits can also be integrated in the panel elements 110.

A ventilation gap 120 whose width is defined using wooden spacer strips 115 that are bounded between the panel element 110 and the trapezoidal sheet 130 and extend as a batten and counter batten in the longitudinal and transverse directions remains free between the panel element 110 and the trapezoidal sheet. The ventilation gap allows a ventilation of the trapezoidal sheet 130 so that no condensate occurs and steam diffusion cannot result in moisture penetration of the roof element 100. The counter batten in the downward slope direction enables a leading off of water on the panel elements 110 as a second water conducting level.

The connection of the panel element 110 and the trapezoidal sheet 130 takes place using metal screws 125 whose lengths are sufficient to also bridge the gap 120. The photovoltaic modules 140 are anchored to the trapezoidal sheet using metal connectors 135. The metal connectors 135 are preferably formed such that the photovoltaic modules 140 can be removed from the roof element 100 to service or replace them, for example. In an embodiment, the roof elements 200 can also be manufactured without photovoltaic modules 140, transported to the construction site, and installed on the roof and the photovoltaic modules 140 are only subsequently installed on the roof. The roof elements 100 can furthermore also be used without photovoltaic modules 140 in an alternative variant.

The roof elements 100 also have prefabricated cabling, not shown in the Figures, for the connection of the photovoltaic modules 140 to keep the cabling required on site as simple as possible.

As can in particular be recognized easily in Figure 1, the trapezoidal sheet 130 projects laterally beyond the panel element 110 in the transverse direction, with the overhang 131 comprising a trapezoid. The trapezoidal sheet 130 terminates flush with the panel element 110 on the other side of the roof element 100, with a trapezoid likewise being located at this margin of the trapezoidal sheet 130.

If the newly added roof element 100 (at the left in Figure 1) is placed edge to edge at an existing roof element as part of the method in accordance with the invention, the trapezoid at the overhang 131 can be fit exactly on the trapezoid at the flush termination of the other roof element 100, as shown by the result in Figure 2. Weatherproof longitudinal connections are produced between the roof elements 100. The roof that is produced thereby immediately becomes rainproof.

The dimensions of the roof element 100 are such that they extend in their longitudinal directions (that is in the depth of the Figure in Figures 1 and 2) over the total pitched roof surface that is formed by them.

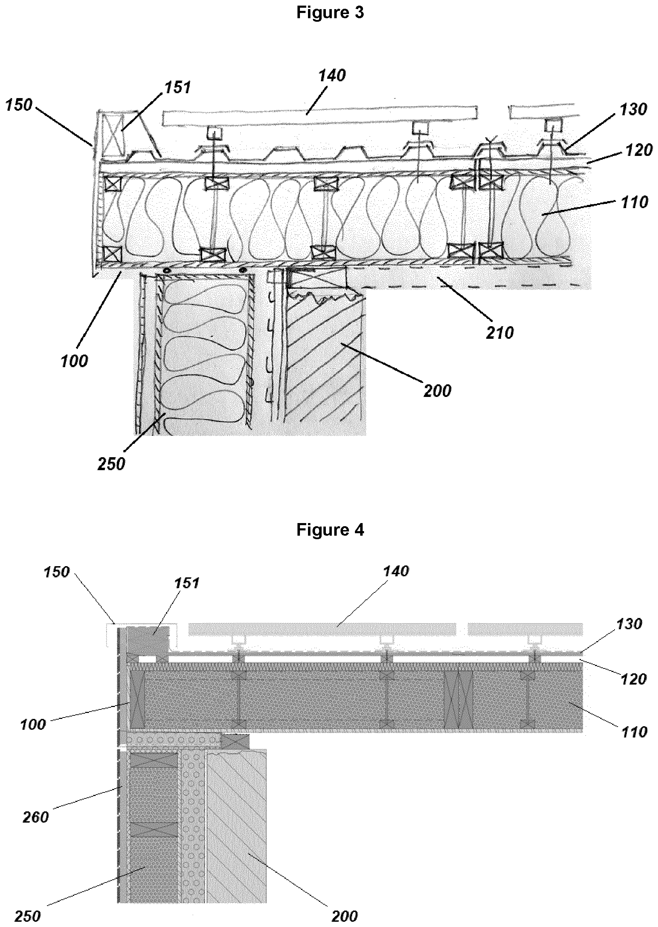

Roofs with or without an overhang at the verge and roofs with or without an overhang in the eaves area can be built using the method in accordance with the invention. Details can be seen in Figures 3 to 6.

Figure 3 shows the region around the verge of a roof surface in an embodiment with an overhang at the verge obtained using a method in accordance with the invention. How a sheet metal covering 150 is placed over the open side edge of the terminating roof element 130 at the verge for the lateral termination of the roof surface can be recognized. The sheet metal covering 150 has the same construction height at the upper side as the photovoltaic modules 140 so that a planar roof surface is produced in which the surfaces of the photovoltaic modules 140 form a planar surface with the verge, ridge and eaves. The construction height of the sheet metal covering 150 is ensured using a square timber 151 serving as a holder. The (lateral) outer wall 200 of the building and a building face element 250 disposed in front of said wall 200 can likewise be recognized in the Figure, said building face element 250 being able to be likewise installed there within the framework of a method of energetic building restoration, for example of a method such as shown in DE 10 2021 107 398.7.

Figure 4 shows the region around the verge of a roof surface in an embodiment without an overhang at the verge obtained using a method in accordance with the invention. The latera termination of the roof surface is formed, instead of by the sheet metal covering 150, by an extension of the outer covering 260 of the building face, for example a wooden covering. The sheet metal covering 150 at the verge is only placed over the square timber 151 to form a flush roof surface with the photovoltaic modules 140.

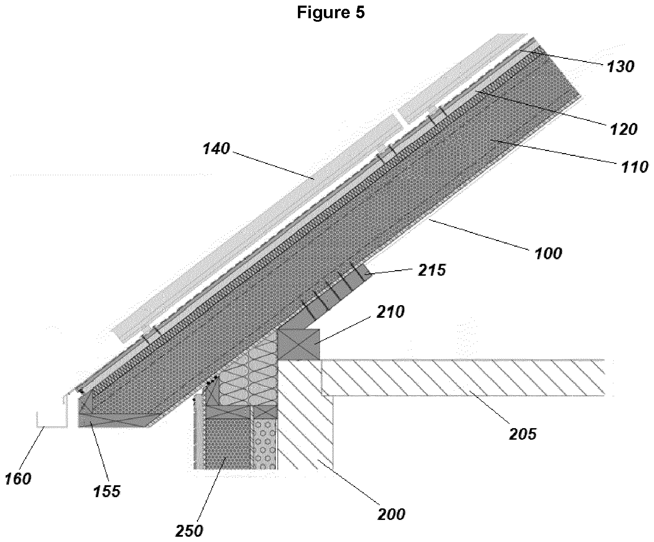

Figure 5 shows the eaves area of a roof surface in an embodiment with an overhang obtained using a method in accordance with the invention. In this variant, the roof elements 100 project in a self-supporting manner beyond the eaves purlin 210. A terminal chord 150 of wood forms an esthetically pleasant and rainproof termination of the roof elements 100 to the outside. A rain gutter 160 is additionally fastened to the drain of the trapezoidal sheet 130. In addition to the elements already described above, the ceiling 205 of the building and a wooden installation wedge 215 for connecting the roof elements 100 and the eaves purlin 210 are also shown in Figure 5. The installation wedge 215 is screwed to the lower side of the panel elements 110 and its chamfered front face lies flat on the eaves purlin 210.

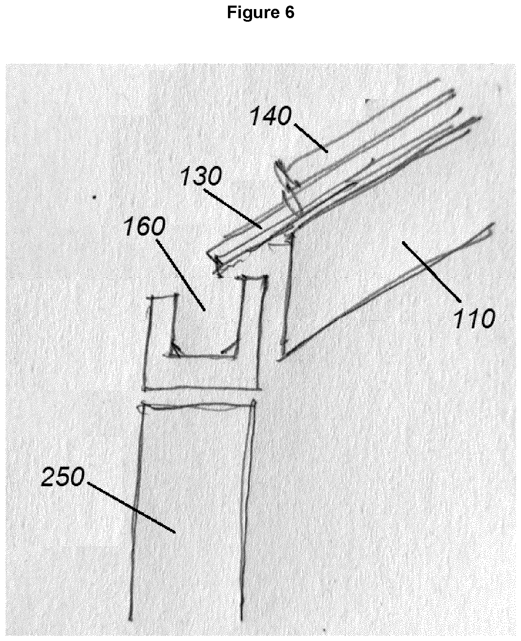

Figure 6 shows the eaves area of a roof surface in an embodiment with an overhang obtained using a method in accordance with the invention. In this case, the roof elements 100 end approximately flush with the outer wall 200 of the building. A recess acting as a roof gutter 160 is incorporated at the upper front side of the building face elements 250 disposed in front of the outer wall.

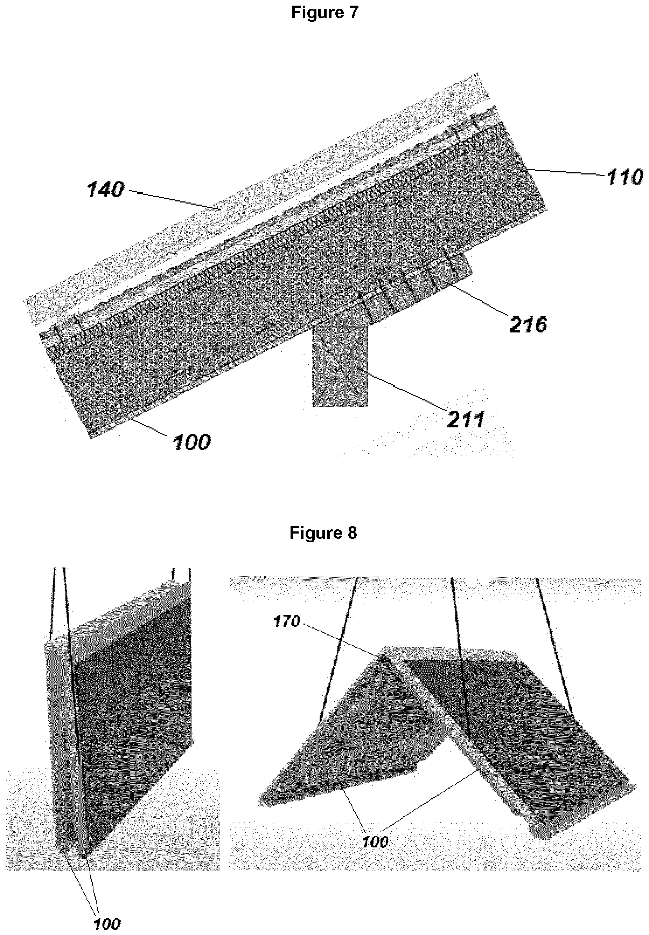

Figure 7 shows the area around a center purlin 211. Analogously to the construction such as is shown in Figure 5 in connection with the eaves purlin 210, a wooden installation wedge 216 is also used in the region of the center purlin 211 for connecting the roof elements 100. The installation wedge 216 is also screwed to the lower side of the panel elements 110. Its chamfered front surface lies flat on the center purlin 211.

In a variant of the invention shown schematically in Figure 8, an installation unit of two roof elements 100 connected via a joint 170 along oppositely disposed transverse sides can be provided ex works that is then transported to the building as a flat part (left image of Figure 8) and can only there be transformed into the substantially bulkier unfolded state (right image of Figure 8). In addition to gaining working efficiency, this variant also has the advantage that horizontal forces in the installation are minimized.

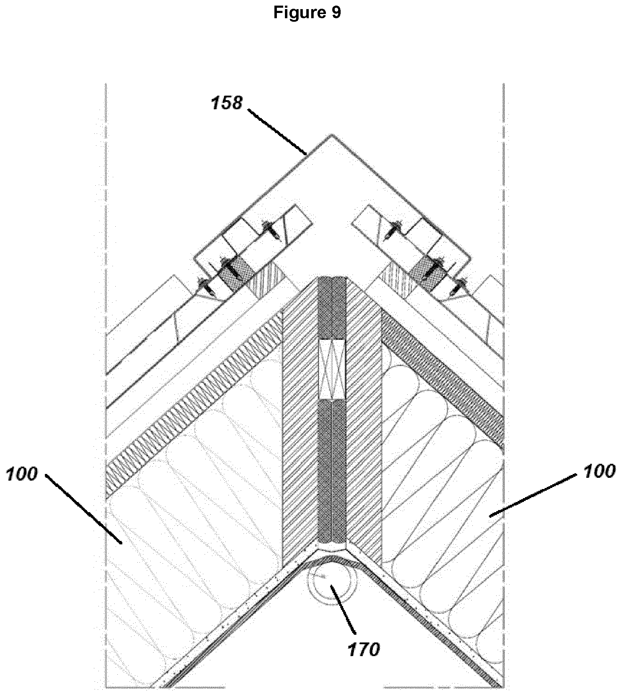

Figure 9 shows the ridge region of a roof that was obtained by placing an installation unit as shown in Figure 8 onto a purlin roof. In addition to the mutually coordinated slanted front surfaces of the two roof elements 100, a metal termination sheet 158 can in particular also be recognized there the forms the ridge line and that covers the gap between the photovoltaic modules 140 or the trapezoidal sheets 130 of the two roof elements 100 in a rainproof manner.

The support of the roof elements 100 on existing or newly laid purlins of the purlin roof, in particular on an eaves purlin 210, optionally a center purlin, and a ridge purlin 220 avoids the generation of a horizontal thrust at their support points, which enables a simple installation.

The abutments between the roof elements 100 and the abutments between the roof elements 100 and other elements of the building are preferably substantially airtight and the adjacent surfaces can also be provided with additional seals for this purpose. This increases the insulating effect of the total system.

The multilayer construction of the roof elements 100 and in particular the above-discussed construction of the panel elements do not only result in good thermal insulation, but also in good sound insulation.

The roof system can be used both in restoration and in roof extension or in new builds. The roof system is suitable for all buildings having roofs of planar surfaces such as saddle roofs, hipped roofs, flat pitched roofs, or for extensions of buildings.

The roof elements 100 are delivered to the construction site as completely prefabricated elements. A large part of the installation process is thereby transferred from the construction site to the factory and the installation time on site is greatly shortened. Typical work processes such as welding, adhesive bonding, plastering, or joining can preferably be dispensed with on site. The roof elements 100 can be produced fast, precisely, and inexpensively using industrialized mass production in the factory. The prefabricated roof elements 100 can be laid fast and securely in all seasons to again close an open roof area of a building in a weatherproof manner in a short time. The installation is generally less weather dependent than typical roof restorations. The installation is possible using a crane and a cherry picker without scaffolding necessarily being required.

## Claims

1. A method of constructing a pitched building roof, in particular a saddle roof,
wherein a plurality of prefabricated roof elements (100) are delivered to a construction site and are placed on a roof framework of the building to form a pitched roof surface;
wherein the prefabricated roof elements (100) each comprise a panel element (110) and a metal sectional sheet (130) covering the panel element (110) at its upper side, wherein the metal sectional sheet (130) is fastened to the panel element (110) such that a ventilation gap is formed between the panel element (110) and the metal sectional sheet (130), and wherein the metal sectional sheet (130) projects laterally beyond the panel element (110) at at least one longitudinal edge of the roof element (100) and forms an overhang;
wherein the roof elements (100) are placed edge to edge on the roof framework so that the overhang of the metal sectional sheet (130) of a roof element (100) covers the abutment between the one roof element (100) and an adjacent roof element (100) of the roof surface and a lateral marginal region of the adjacent roof element (100);
**characterized in that**
the panel elements (110) are insulated and produced in a wooden frame construction, so that the panel elements (110) comprise the wooden frame construction; and wherein in particular wooden boardwalks (111) are used as supports for the wooden frame construction; and
wherein spacing strips (115) are arranged between the panel element (110) and the metal sectional sheet (130) of each of said prefabricated roof elements (100), for example as a batten or counter batten, to define the ventilation gap (120) between the metal sectional sheet (130) and the panel element (110).

2. A method in accordance with claim 1, **characterized in that** the metal sectional sheet (130) is a trapezoidal sheet.

3. A method in accordance with one of the preceding claims, **characterized in that** the metal sectional sheet (130) projects laterally beyond the panel element (110) in its transverse direction, and indeed so far that the overhang (131) comprises at least one sectional structure of the repetitive sectional structures of the metal sectional sheet (130), and with the metal sectional sheet (130) terminating flush with the panel element (110) at the other side of the roof element (100) and the same repetitive sectional structure as at the overhang (131) being present at this margin of the metal sectional sheet (130).

4. A method in accordance with one of the preceding claims, **characterized in that** the prefabricated roof elements (100) additionally comprise at least one photovoltaic module (140) that is fastened over the metal sectional sheet (130).

5. A method in accordance with one of the preceding claims, **characterized in that** the roof framework is a purlin roof; and **in that** the roof elements (100) are placed on inferior and ridge purlins (210) or on inferior and center purlins (210) or center and ridge purlins (210) of the roof framework and are fastened there.

6. A method in accordance with one of the preceding claims, **characterized in that** a prefabricated installation composed of two roof elements (100) connected via a joint (170) along oppositely disposed transverse sides is placed on the roof framework with the two roof elements (100) of the installation unit being transformed from a folded position into an open position prior to the placing onto the roof framework.

7. A method in accordance with one of the preceding claims, **characterized in that** the method is carried out as part of an energetic renovation of an existing building in which at least a part of the existing building roof had been removed beforehand.

8. A method in accordance with one of the preceding claims, **characterized in that** the method comprises the manufacture of the prefabricated roof elements (100) with a standardized design and from standardized components, but with individual dimensions, as part of an individualized mass production in a factory, before the delivery thereof to the construction site, with a measuring of the building taking place prior to the production, in particular using a laser scan or a photographic measurement and the conversion of the measurements thus acquired into corresponding production data by means of planning software.

9. A roof element (100) comprising a panel element (110) and a metal sectional sheet (130) covering the panel element (110) at its upper side, wherein the metal sectional sheet (130) is fastened to the panel element (110) such that a ventilation gap is formed between the panel element (110) and the metal sectional sheet (130), and wherein the metal sectional sheet (130) projects laterally beyond the panel element (110) at at least one side edge of the roof element (100) and forms an overhang,
**characterized in that**
the panel element (110) is insulated and produced in a wooden frame construction, so that the panel element (110) comprises the wooden frame construction, wherein in particular wooden boardwalks (111) are being used as supports for the wooden frame construction, and wherein spacing strips (115) are arranged between the panel element (110) and the metal sectional sheet (130), for example as a batten or counter batten, to define the ventilation gap (120) between the metal sectional sheet (130) and the panel element (110).

10. An installation unit composed of two roof elements (100) in accordance with claim 9 connected via a joint (170) along oppositely disposed transverse sides.

## Patentansprüche

1. Verfahren zur Konstruktion eines geneigten Gebäudedachs, insbesondere eines Satteldachs,
wobei eine Mehrzahl an vorgefertigten Dachelementen (100) an eine Baustelle geliefert und auf einem Dachstuhl des Gebäudes gesetzt werden, um eine geneigte Dachfläche zu bilden;
wobei die vorgefertigten Dachelemente (100) jeweils ein Tafelelement (110) sowie ein das Tafelelement (110) an seiner Oberseite überdeckendes Profilblech (130) umfassen, wobei das Profilblech (130) so am Tafelelement (110) befestigt ist, dass zwischen dem Tafelelement (110) und dem Profilblech (130) ein Belüftungsspalt gebildet ist, und wobei das Profilblech (130) an zumindest einer Längsseite des Dachelements (100) seitlich über das Tafelelement hinausragt und einen Überstand bildet;
wobei die Dachelemente (100) am Dachstuhl auf Stoß aneinandergesetzt werden, sodass der Überstand des Profilblechs (130) eines Dachelements (100) den Stoß zwischen dem einen Dachelement (100) und einem benachbarten Dachelement (100) der Dachfläche sowie einen seitlichen Randbereich des benachbarten Dachelements (100) überdeckt,
**dadurch gekennzeichnet,**
**dass** die Tafelelemente (110) gedämmt sind und in Holzrahmenbauweise gefertigt werden, sodass die Tafelelemente (110) in Holzrahmenbauweise gefertigt sind, und wobei als Träger für die Holzrahmenkonstruktion insbesondere Holzstegträger (111) verwendet werden; und
wobei zwischen dem Tafelelement (110) und dem Profilblech (130) jedes der genannten Dachelemente (100) Abstandsleisten (115) angeordnet sind, beispielsweise als Lattung oder Konterlattung, um den Belüftungsspalt (120) zwischen dem Profilblech (130) und dem Tafelelement (110) zu definieren.

2. Verfahren nach Anspruch 1, **dadurch gekennzeichnet, dass** es sich bei dem Profilblech (130) um ein Trapezblech handelt.

3. Verfahren nach einem der vorhergehenden Ansprüche, **dadurch gekennzeichnet, dass** das Profilblech (130) in seiner Querrichtung seitlich über das Tafelelement (110) hinausragt, und zwar so weit, dass der Überstand (131) zumindest eine Profilstruktur der repetitiven Profilstrukturen des Profilblechs (130) umfasst, und wobei das Profilblech (130) an der anderen Seite des Dachelements (100) bündig mit dem Tafelelement (110) abschließt und sich an diesem Rand des Profilblechs (130) dieselbe repetitive Profilstruktur wie am Überstand (131) befindet.

4. Verfahren nach einem der vorhergehenden Ansprüche, **dadurch gekennzeichnet, dass** die vorgefertigten Dachelemente (100) zusätzlich wenigstens ein Photovoltaikmodul (140) umfassen, das über dem Profilblech (130) befestigt ist.

5. Verfahren nach einem der vorhergehenden Ansprüche, **dadurch gekennzeichnet, dass** es sich bei dem Dachstuhl um ein Pfettendach handelt und dass die Dachelemente (100) auf Fuß- und Firstpfetten (210) oder Fuß- und Mittelpfetten (210) oder Mittel- und Firstpfetten (210) des Dachstuhls aufgelegt und dort befestigt werden.

6. Verfahren nach einem der vorhergehenden Ansprüche, **dadurch gekennzeichnet, dass** eine vorgefertigte Montageeinheit aus zwei entlang gegenüberliegender Querseiten über ein Gelenk (170) verbundenen Dachelementen (100) auf den Dachstuhl gesetzt wird, wobei die beiden Dachelemente (100) der Montageeinheit vor dem Setzen auf den Dachstuhl aus einer gefalteten Position in eine offene Position überführt werden.

7. Verfahren nach einem der vorhergehenden Ansprüche, **dadurch gekennzeichnet, dass** das Verfahren im Rahmen einer energetischen Sanierung eines Bestandsgebäudes durchgeführt wird, bei der zuvor zumindest ein Teil des bestehenden Gebäudedachs abgetragen wurde.

8. Verfahren nach einem der vorhergehenden Ansprüche, **dadurch gekennzeichnet, dass** das Verfahren vor der Lieferung der vorgefertigten Dachelemente (100) an die Baustelle deren Herstellung mit einem standardisierten Aufbau und aus standardisierten Komponenten, jedoch mit individuellen Abmessungen, im Rahmen einer individualisierten Massenproduktion in einer Fabrik umfasst, wobei vor der Produktion eine Vermessung des Gebäudes erfolgt, insbesondere anhand von Laserscan oder einer fotographischen Vermessung, und die Umrechnung der so gewonnenen Maße mittels einer Planungssoftware in entsprechende Produktionsdaten.

9. Dachelement (100) umfassend ein Tafelelement (110) sowie ein das Tafelelement (110) an seiner Oberseite überdeckendes Profilblech (130), wobei das Profilblech (130) so am Tafelelement (110) befestigt ist, dass zwischen dem Tafelelement (110) und dem Profilblech (130) ein Belüftungsspalt gebildet ist, und wobei das Profilblech (130) an zumindest einer Seitenkante des Dachelements (100) seitlich über das Tafelelement (110) hinausragt und einen Überstand bildet,
**dadurch gekennzeichnet,**
**dass** das Tafelelement (110) gedämmt und in Holzrahmenbauweise gefertigt wird, sodass das Tafelelement (110) in Holzrahmenbauweise gefertigt ist, wobei als Träger für die Holzrahmenkonstruktion insbesondere Holzstegträger (111) verwendet werden, und wobei zwischen dem Tafelelement (110) und dem Profilblech (130) Abstandsleisten (115) angeordnet sind, beispielsweise als Lattung oder Konterlattung, um den Belüftungsspalt (120) zwischen dem Profilblech (130) und dem Tafelelement (110) zu definieren.

10. Montageeinheit aus zwei entlang gegenüberliegender Querseiten über ein Gelenk (170) verbundenen Dachelementen (100) nach Anspruch 9.

## Revendications

1. Procédé de construction d'un toit de bâtiment incliné, en particulier d'un toit en forme de selle,
dans lequel une pluralité d'éléments de toit préfabriqués (100) sont livrés à un site de construction et sont placés sur une charpente de toit du bâtiment pour former une surface de toit incliné ;
dans lequel les éléments de toit incliné (100) comprennent respectivement un élément de panneau (110) et une feuille sectionnelle métallique (130) recouvrant l'élément de panneau (110) sur son côté supérieur, dans lequel la feuille sectionnelle métallique (130) est fixée à l'élément de panneau (110) de telle sorte qu'un espace de ventilation est formé entre l'élément de panneau (110) et la feuille sectionnelle métallique (130), et dans lequel la feuille sectionnelle métallique (130) fait saillie latéralement de l'élément de panneau (110) sur au moins un bord longitudinal de l'élément de toit (100) et forme un porte-à-faux ;
dans lequel les éléments de toit (100) sont placés bord contre bord sur la charpente de toit de telle sorte que le porte-à-faux de la feuille sectionnelle métallique (130) d'un élément de toit (100) recouvre la butée entre un élément de toit (100) et un élément de toit (100) adjacent de la surface de toit et d'une zone marginale latérale de l'élément de toit (100) adjacent ;
**caractérisé en ce que**
les éléments de panneau (110) sont isolés et sont produits selon une structure de cadre en bois de telle sorte que les éléments de panneau (110) comprennent la structure de cadre en bois ; et dans lequel en particulier des promenades en bois (111) sont utilisées en tant que supports pour la structure de cadre en bois et
dans lequel des bandes d'espacement (115) sont disposées entre l'élément de panneau (110) et la feuille sectionnelle métallique (130) de chacun desdits éléments de toit préfabriqués (100), par exemple comme un liteau ou un contre-liteau, pour définir l'espace de ventilation (120) entre la feuille sectionnelle métallique (130) et l'élément de panneau (110).

2. Procédé selon la revendication 1, **caractérisé en ce que** la feuille sectionnelle métallique (130) est une feuille trapézoïdale.

3. Procédé selon l'une quelconque des revendications précédentes, **caractérisé en ce que** la feuille sectionnelle métallique (130) fait saillie latéralement au-delà de l'élément de panneau (110) dans sa direction transversale, et ce si loin que le porte-à-faux (131) comprend au moins une structure sectionnelle des structures sectionnelles répétitives de la feuille sectionnelle métallique (130), la feuille sectionnelle métallique (130) étant raccordée en affleurement avec l'élément de panneau (110) sur l'autre côté de l'élément de toit (100) et la même structure sectionnelle répétitive faisant office de porte-à-faux (131) étant présente sur cette marge de la feuille sectionnelle métallique (130).

4. Procédé selon l'une quelconque des revendications précédentes, **caractérisé en ce que** les éléments de toit préfabriqués (100) comprennent en supplément au moins un module photovoltaïque (140) qui est fixé au-dessus de la feuille sectionnelle métallique (130).

5. Procédé selon l'une quelconque des revendications précédentes, **caractérisé en ce que** la charpente de toit est un toit à pannes ; et que les éléments de toit (100) sont placés sur des pannes (210) faîtières inférieures ou sur des pannes (210) centrales inférieures ou sur des pannes (210) faîtières centrales de la charpente de toit et y sont fixés.

6. Procédé selon l'une quelconque des revendications précédentes, **caractérisé en ce qu'**une installation préfabriquée composée de deux éléments de toit (100) raccordés par l'intermédiaire d'un joint (170) le long de côtés transversaux disposés à l'opposé est placée sur la charpente de toit, les deux éléments de toit (100) de l'unité d'installation étant amenés d'une position pliée dans une position ouverte avant le placement sur la charpente de toit.

7. Procédé selon l'une quelconque des revendications précédentes, **caractérisé en ce que** le procédé est réalisé comme faisant partie d'une rénovation énergétique d'un bâtiment existant, dans lequel au moins une section du toit de bâtiment existant a été retirée au préalable.

8. Procédé selon l'une quelconque des revendications précédentes, **caractérisé en ce que** le procédé comprend la fabrication des éléments de toit (100) préfabriqués avec une conception standardisée et à partir de composants standardisés mais avec des dimensions individuelles, en tant que partie d'une production en série individualisée dans une usine avant la livraison de ceux-ci au site de construction, avec une mesure du bâtiment ayant lieu avant la production, en particulier en utilisant un système de balayage à laser ou un dispositif de mesure par photographies et la conversion des mesures ainsi acquises en des données de production correspondantes au moyen d'un logiciel de planification.

9. Elément de toit (100) comprenant un élément de panneau (110) et une feuille sectionnelle métallique (130) recouvrement l'élément de panneau (110) sur son côté supérieur, dans lequel la feuille sectionnelle métallique (130) est fixée à l'élément de panneau (110) de telle sorte qu'un espace de ventilation est formé entre l'élément de panneau (110) et la feuille sectionnelle métallique (130), et dans lequel la feuille sectionnelle métallique (130) fait saillie latéralement au-delà de l'élément de panneau (110) sur au moins un bord latéral de l'élément de toit (100) et forme un porte-à-faux,
**caractérisé en ce que**
l'élément de panneau (110) est isolé et est produit dans une structure de cadre en bois de telle sorte que l'élément de panneau (110) comprend la structure de cadre en bois, dans lequel en particulier des promenades en bois (111) sont utilisées en tant que supports pour la structure de cadre en bois, et dans lequel des bandes d'espacement (115) sont disposées entre l'élément de panneau (110) et la feuille sectionnelle métallique (130), par exemple comme un liteau ou un contre-liteau, pour définir l'espace de ventilation (120) entre la feuille sectionnelle métallique (130) et l'élément de panneau (110).

10. Unité d'installation composée de deux éléments de toit (100) selon la revendication 9 reliés par l'intermédiaire d'un joint (170) le long de côtés transversaux disposés de manière opposée.
